# EUROPEAN PATENT SPECIFICATION

(11) **EP 1 992 834 B1**
(45) Date of publication and mention of the grant of the patent: **08.09.2010**
(21) Application number: 07009741.5
(22) Date of filing: 16.05.2007
(51) Int. Cl.: F16F 7/14, G10K 11/162

(54) **Vibration Absorber**
Schwingungsdämpfer
Absorbeur de vibrations

(43) Date of publication of application: 19.11.2008
(73) Proprietor: Petzold, Gerhard, 92331 Parsberg (DE)
(72) Inventor: Petzold, Gerhard, 92331 Parsberg (DE); Wagner, Peter, 92364 Deining (DE)

(56) References cited:
- EP-A- 1 731 298
- FR-A- 2 699 630
- FR-A- 2 757 235
- US-A- 5 120 032
- US-A1- 2002 153 084
- DATABASE WPI Week 198023 Derwent Publications Ltd., London, GB; AN 1980-F1205C XP002457878 -& SU 693 041 A (KHARK TURBINE WKS) 3 November 1979 (1979-11-03) -& SU 693 041 A1 (KH TURBINNYJ ZAVOD IM S M KIRO [SU]) 25 October 1979 (1979-10-25)

## Description

### FIELD OF THE INVENTION

The invention relates to means and procedures for simple and effective passive absorption of oscillations, like vibrations and interfering noises, preferably in transfer elements in the proximity to the place of its emergence.

### SUMMARY OF THE INVENTION

Damping vibrations and interfering noises are reduced by capillaric fibers made of thermoplastic synthetics, thermally bonded and inserted into bores or voids with mild pressure.
Internal friction of these elements effectively reduce the amplitude of vibrating parts, particularly within audible frequency spectra.
Therefore these vibration absorbers are particularly applicable in optical, acoustic, electroacoustic and electronic elements and devices.

### BACKGROUND OF THE INVENTION

Oscillations likeof vibrations and interfering noises appear as secondary effects in a multiplicity of technical devices and procedures.
Particularly with electroacoustic devices and in audiophile appliances, secondary oscillations lead to substantial degradation of the transmission quality.

### PRIOR ART

Hitherto for absorption of such oscillations the following procedures use to be applied:
1. Suspending the vibrating element in elastomers or felt, or the absorption of one swinging level by transmitting its movement through mechanical elements into said materials.
2. Absorption by transmission through liquids, which are forced through resistant openings (as with automotive shock absorbers), or through specific current attenuators in liquids (e.g. in JP 62-305 379 FF), particularly in rheologic fluids, that can be solidificated when exposed to electrical fields.
3. Electrical oscillation damping, with eddy currents induced into metal plates, or by tensions electrically induced into piezo elements and their deflection into resistances (e.g. carbon or resin fibers, like in JP 2000-121475 FF and EP 1,186,630) or by active inverse feedback of phase transferred oscillations by piezoelectric or magnet-dynamic actuators (e.g. in JP 5-089366, US 6.959.484 and 6.241.062, GB 921 71 29, USSR 188/380, as well as DE 198 32 697 and 1971 22 92).
4. Interruption of the transmission path by decoupling elements, e.g. suspension on spike-bearings and application of additional masses, in order to shift resonant frequencies of transfer elements below the threshold of hearing or emerging modulation frequencies.

However, particularly with high-quality electroacoustic devices, all these methods are impaired by particular drawbacks. So suspension in absorbing elements works well only conditionally, because selective absorption can worsen sound characteristics into "dully and mustily" and "sterile" sound, what tends to be technically elusive and hardly calculable.

Absorbing liquids, in particular rheologic silicone oils can be effective at primarily excited elements, e.g. loudspeaker coils. However, often similar problems appear, disregard sensitivity of damping effects on temperature gradients, difficult handling and problems of deterioration.

Electrical oscillation damping with eddy currents is hardly feasible for said applications, it often results in parasitic modulation effects and thus leads to degradation of audiophile sound quality.

Electronic inverse feedback is a usual procedure in amplifier systems, particularly to avoid squeegeeing. But here the limits of post-facto-corrections are well researched and audible: systems designed to operate only within the most linear operating ranges of their semiconductors, which therefore apply only little or no inverse feedback (e.g. Class A systems) usually result in more natural sound characteristics.

Inverse feedback on transducers has proved to be of just as little value, and so loudspeakers with inverse feedback, that once received rave reviews, disappeared from market.

It thus seems quite little promising to apply inverse feedback against mechanical and airborne sound disturbances, as long as oscillation propagation, diffraction and intermodulation effects appear in complex surroundings.

Sofar only cutting off progagation or damping propagating elements remain feasible ways of surpressing parasitic oscillations.

However, applying elastomers etc. on possibly vibrating construction units hardly works satisfactorily. They necessarily add a secondary mass to the swinging element, which shifts the frequency down (what may be desired or not). But it might even amplify the vibration, despite the dissipation of energy within the elastomer, since the absorbing effect of the elastomer directly corresponds to the thickness of the applied layer-and thus its mass, which might provoke stronger resonance.

Cutting-off transmission of vibrations e.g. by frictional suspension on small surfaces, e.g. the positioning of loudspeaker cabinets on metal spikes, can be effective, however depend on so many hardto-grip parameters, that results rather represent coincidence products than calculable magnitudes.

Other procedures to prevent or reduce oscillations on elements within their path of propagation usually employ materials of high internal absorption.

However, this mostly conflicts with other desired characteristics, like rigidity and small weight of construction units, or disadvantages, like high cost, or waist management problems - e.g. the difficulty of recycling reinforced plastics, or incompounded components like Zincoxyde whiskers (as in JP 63-321004).

One reason for the conflicts of desired construction characteristics and vibrational damping is, that oscillation damping with usual methods, in particular the employment of viscoelastic materials, or soft metals, like Mn-Cu alloys, work isotropically, i.e. without defined direction, within which absorptions works effectively.

This prevents the combination of the absorption of one oscillation level with the preservation of suitable material characteristics, e.g. pressure resistance or Young's modulus within other vectors of the vibrating unit.

However, there are a few damping methods known in the art, like the use of memory-metals aligned to their crystal structure (US 5.005.678), multi-layered metal components with inclusions of powdered or fibrous fabrics of other metals, ceramic(s) or resins (JP 61-142 709) or the arrangement of thin viscoelastic layers to laminates with rigid inlays (US 5.087.491), which are used to effect anisotropic absorption.

While prior methods proved to be problematic with regard to cost and effectiveness, the latter had been successful and commonly used for vibration absorption on laminar constructions.

Another anisotropic damping element, applicable as a three-dimensional construction unit, was presented in US 5.087.491. This would consist of hollow bodies wound in multiple layers.
Unfortunately this elements require substantial masses of material and thus would result in quite a few design problems at any probable construction.

Document SU 693 041 A discloses a vibration absorber with the features of the preamble of claim 1.

### DESCRIPTION OF THE BASIC EMBODIMENTS

### Conceptual Formulation

As to the afore mentioned problems of vibration damping, it is the object of the present invention to find a damping procedure with suitable elements, that would attenuate vibrations at their origin and/or in transmitting elements without mainly selectively absorbing, whilst the mass of the vibrating units is not increased, mechanical specifications remain unchanged in relevant vectors and damping would be achieved at low cost.

### General Construction

This task is achieved by a vibration absorber as defined by claim 1, namely by inserting absorbers onto or into vibrating elements, which not, or not primarily, rely on dissipation in elastomers or other aforementioned procedures, but on the internal absorption of capillary fibers and their friction to the walls of bores or recesses, in which they are inserted under moderate pressure.
Thus their absorption is fairly anisotropic, i.e. directed along the fibers and can be effectively adjusted by the alignment of appropriate recesses, such as drillings or slots.

For simple applications within a moderate temperature range, protruded thermoplastic fibers of a diameter from 10 to 50 um, containing capillaries of 2 to 6 um, proved to work satisfactorily.
Their absorption characteristics basically result from flexible deformation of the fibers within itself and therefore not only prove to be quite linearly attenuating the audible frequency range, but when bundled and moderately thermally bonded and pressed, show anisotropic characteristics in suitably arranged recesses.
Such fibers are otherwise used for filtering and dosed propagation of small amounts of fluids in technical and biochemical apparatus.

In an alternative embodiment of the invention, said fiber bundles may be saturated with matrices of high boundary surface tension, but limited adhesion to the fibers. This may-in some casesstrengthen the damping effect, but necessarily tends to compromise with the aforementioned drawbacks of viscous damping elements.

### BRIEF DESCRIPTION OF THE DRAWINGS

**Fig. 1** shows the example of a favorable employment of the procedure with said fiber bundles **4** at a transparent representation of a rotary shaft **2.**
**Fig. 2** shows in a lateral transparency representation, how these fiber bundles in the hollow chambers **4** are subjected to lengthening **7** and compression with deflection of shafts due to vibrational forces.
**Fig. 3** shows at an almost axial and transparent view, how fiber bundles in hollow chambers **20,** positioned in a concentric circle around axis 22 can also absorb torsional vibrations due to forced lengthening and compression of the bundles.
**Fig. 4** demonstrates, how something similar results in a disk body **10,** whose vibration-conditioned deflection **11** must lead to a lengthening and compression of the integrated fiber bundles **12** in the hollow chambers **13.**
**Fig. 5** exemplifies the application of said fiber bundles **30** for acoustical damping on covers **31** of e.g. transducers, preferably integrated into recesses **32** on ribs and stringers **33** thereon.
**Fig 6** shows a profile **35** with pressed-in fiber bundles **36,** which may be prefabricated and fastened inside or outside on similar covers.
**Fig. 7** discloses an absorber plate **40** with hollow chambers **41** for inserting fiber bundles **42,** which may be laminated, screwed or clipped on surfaces of vibration-affected construction elements in proper alignment of their bores to the direction **45** of vibration propagation.
**Fig 8** shows the cross-sections of an appropriate fiber **50** with its fibrils **51** and capillary skeins **52.**

### DETAILED DESCRIPTION OF PREFERRED EMBODIMENTS.

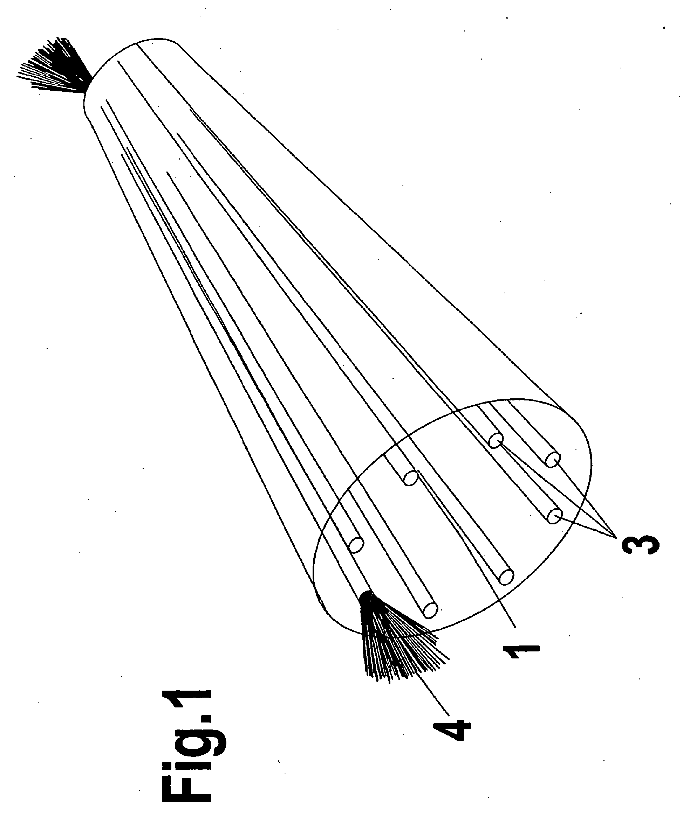

**Fig. 1** shows in a semi-transparent view, how hollow chambers **3** (e.g. made as drillings or during extrusion) are positioned concentrically around the middle axis **1** of a shaft **2,** the off-axis distance of said cambers to be approx. 3/4 of the outer radius, and how fiber bundles **4** are inserted therein under mild pressure.

The advantage of this arrangement is, that concentric drillings in this way only marginally impair mechanical characteristics, as well-known from comparisons of the mechanical parameters between hollow shafts with comparable wall thickness and solid cylinders.

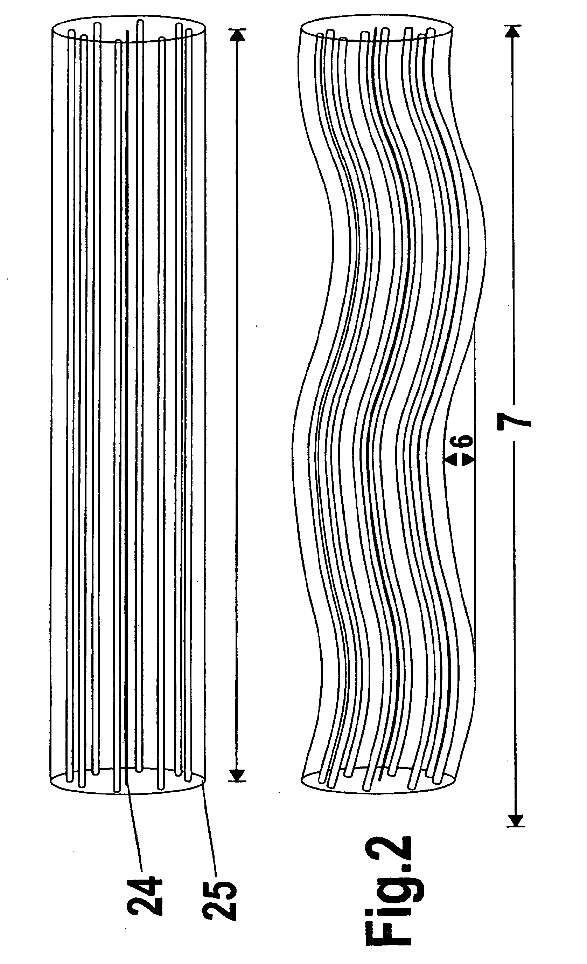

**Fig. 2****:** demonstrates, how vibration-induced deflections **6** transverse to the longitudinal axis **24** necessarily lengthen **7** and compress the fiber bundles **25,** so to make them unfold their absorption effect.

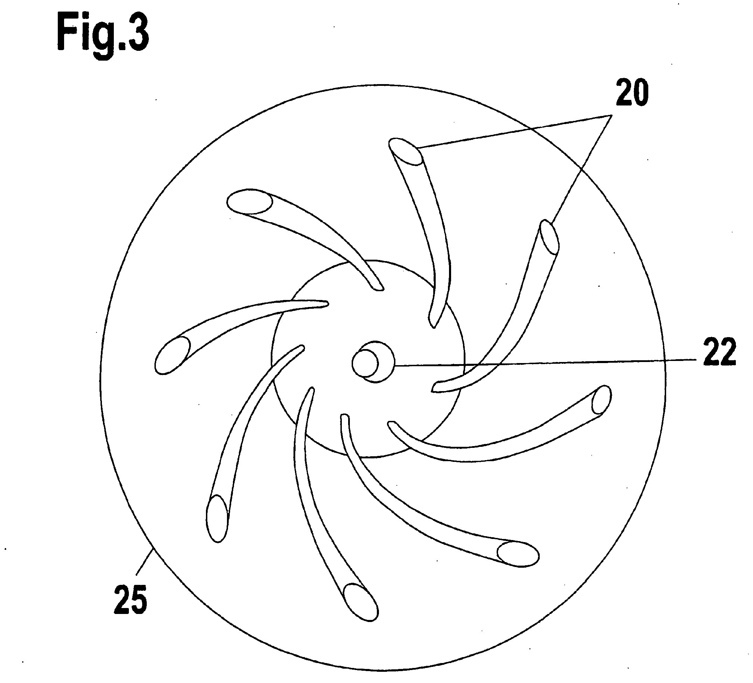

**Fig. 3** in a transparent, slightly off-axis perspective of said cylinder, show how the positioning of fiber bundles **20** into bores concentric to the middle axis **22** also absorb torsional vibrations, resulting of the lengthening and twisting the fiber bundles.
It also makes visible, that inserting fiber bundles into the center of a hollow shaft would be less favorable, because torsion vibration would only be damped by slightly twisting the fiber bundles without lengthening and compressing it. Besides, in practical applications usually complex vibratory systems appear, so that their attenuation is substantially better with concentric bores.

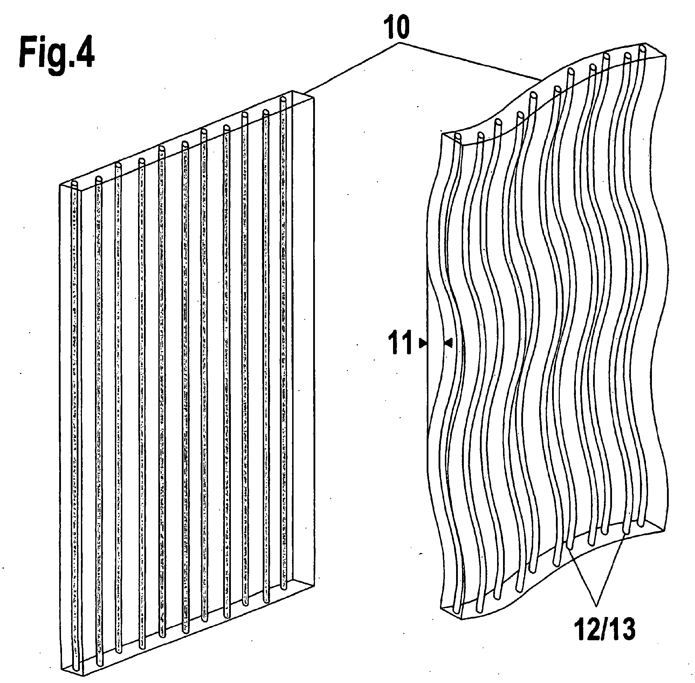

**Fig. 4** shows the damping effect of inserted fiber bundles **12/13** in plates **10.**
As this is also mainly an effect of the necessary lengthening and compression of the fiber bundles due to the deflection **11,** this makes obvious that the attenuative effect mainly works along the propagation path of e.g. sound waves, what makes it mandatory to align the bores or the plate to this direction.

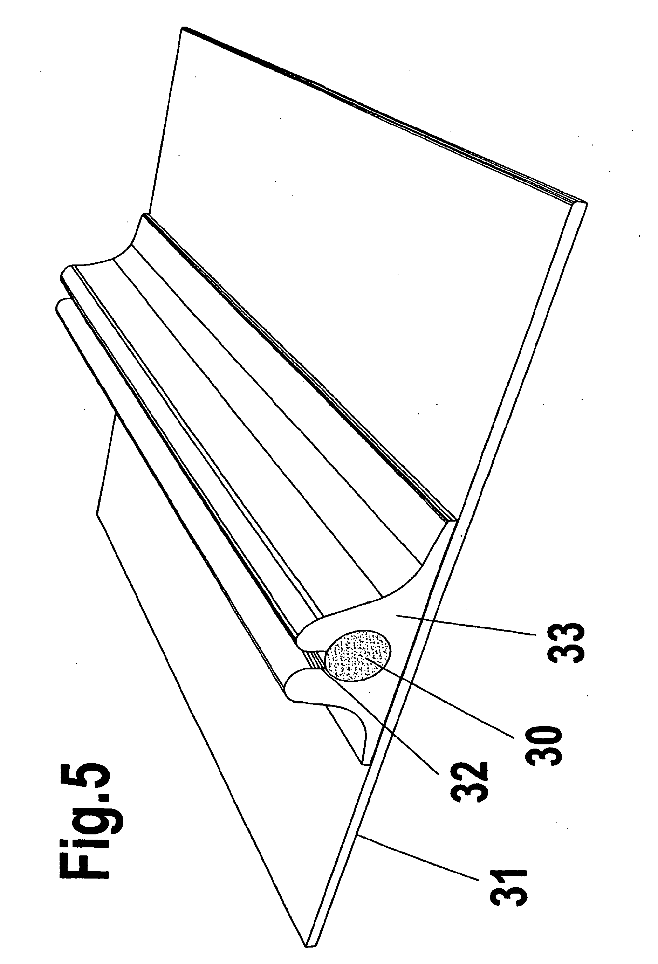

**Fig. 5** demonstrates the employment of appropriate fiber bundles **30** for absorption of vibrations on surfaces **31,** e.g. the covers of Transducers of acoustical pick-ups or microphones. Fiber bundles 30 therefore are inserted into slots **32** of frameworks or stringers **33,** which can easily be applied (e.g. glued on) as reinforcements even after basic manufacturing.

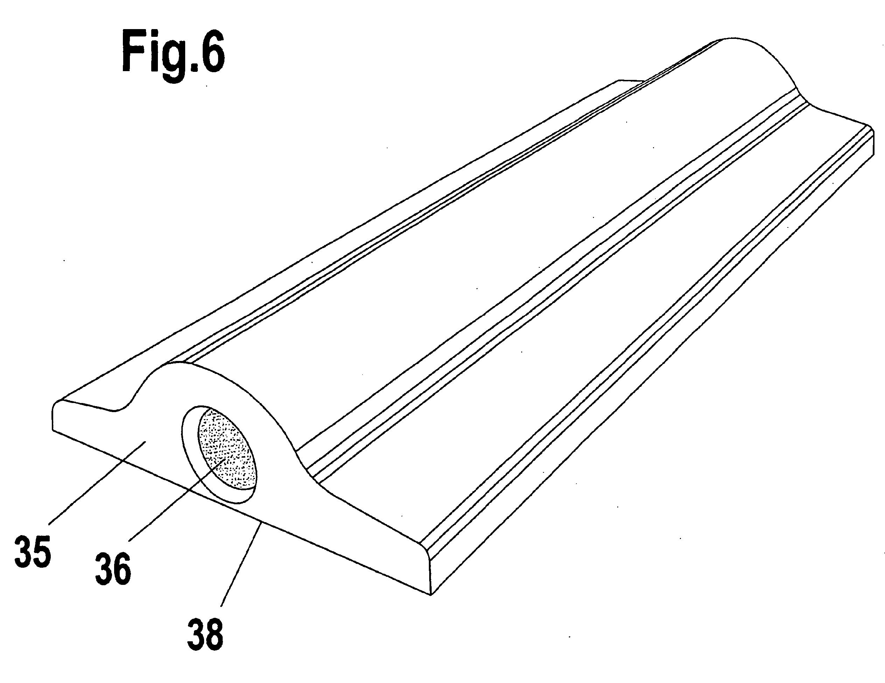

**Fig. 6** discloses another damper profile, where the fiber bundle **36** is applied inside a cylindric cavity. It might as well be applied inside or outside of vibrating elements when attached at its bottom 38. It is as well conceivable to prefabricate it and to apply on propagation paths at arising oscillation problems.

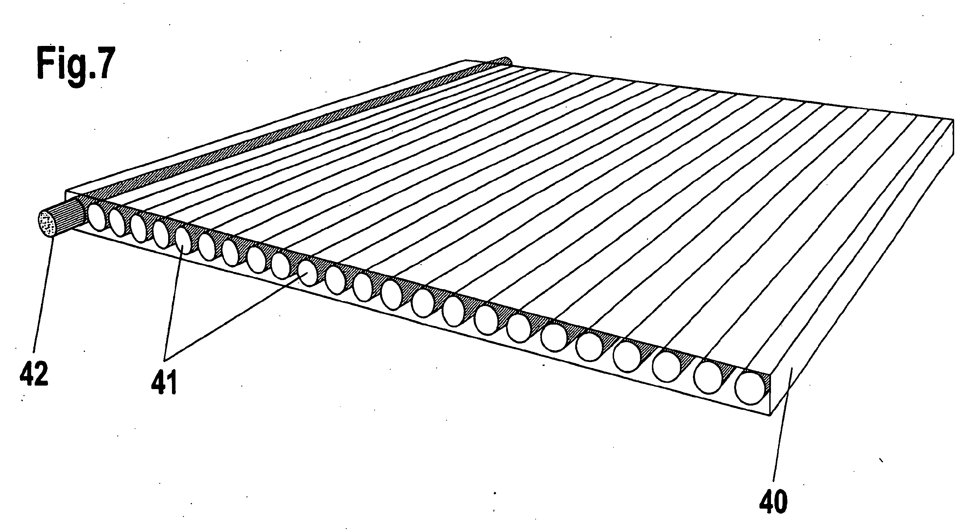

**Fig. 7** shows a damper plate **40** with longitudinal cylindric recesses **41,** wherein fiber bundles **42** are inserted. These units are applicable e.g. to fixtures of optical systems and image converters, vibrosensitive- sensitive integrated circuits and similar electronic components.
For the absorption of complex oscillations a stack of these elements can be applied, wherein each damper plate may be aligned to different wave propagation paths.
The alignment can be most easily achieved when multiple plates are stacked on one massive central axis, the lowest plate firmly glued on that vibrating surface and the axis connecting the rest of the stack to it, the plates then being aligned by rotatively turning and fixing one after the other with glue or tie lock.

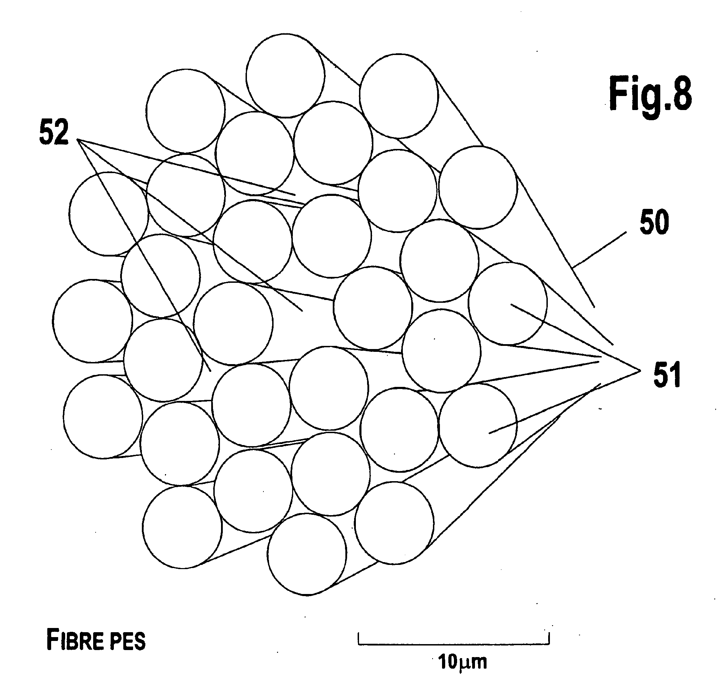

**Fig. 8** discloses the cross-section of an appropriate fiber **50.** It contains strings of thermoplastic fibrils 51, slightly compressed and thermally bonded together and therefore forming capillary skeins **52.** These fibers otherwise are known for medical applications, inkfeeders and-doped with catalytic elements-in biological filter systems.

## Claims

1. Vibration absorber, comprising bundles (4) of capillary fibers in longitudinal orientation, moderately compressed within tubular hollow bodies (3) or similar profiles, **characterized in that** said bundles (4) of capillary fibers comprise thermoplastic fibers of a diameter from 10 µm to 50 µm containing capillaries of 2 to 6 µm.

2. Vibration absorber according to claim 1, comprising a frictional connection of said bundles (4) of capillary fibers to the walls of the hollow body or profile.

3. Vibration absorber according to claim 1 and 2, comprising thermoplastic fibers of capillary interior structure.

4. Vibration absorber according to claim 1 to 3, comprising fibers which are thermally bonded.

5. Vibration absorber according to claim 1 and 2, wherein said tubular hollow bodies (3) or similar profiles are the vibration transmitting elements or elements wherein vibrations are generated.

6. Vibration absorber according to claim 1 and 2, wherein said tubular hollow bodies (3) or similar profiles are to be applied for absorption on vibrating elements.

7. Vibration absorber according to claim 6, comprising constructions of frames and stringers made of said tubular hollow bodies (3) or similar profiles are to be applied on laminar structures.

8. Vibration absorbers according to claim of 7, wherein these profiles exhibit longitudinal slots, into which fiber bundles are inserted with slight compression.

9. Vibration absorber according to claim 1, comprising plate-shaped profiles containing hollow sections of parallel orientation, to be applied for oscillation damping on laminar elements.

10. Vibration absorber according to claim 9, the hollow sections of said absorber plates to be aligned to the direction of the propagation of wavy oscillations.

11. Vibration absorber according to claim 9 and 10, comprising several of these absorber plates to be arranged rotatively on one another in order to optimize vibration damping by differentiated alignments.

12. Vibration absorber according to one of the preceding claims, wherein said tubular hollow bodies (3) or similar profiles are saturated with matrices of high boundary surface tension, but limited adhesion to the fibers.

## Patentansprüche

1. Schwingungsdämpfer, aufweisend Bündel (4) von Kapillarfasern in Längsausrichtung, die innerhalb rohrförmiger Hohlkörper (3) oder ähnlichen Profilen mäßig gepresst sind, **dadurch gekennzeichnet, dass** die Bündel (4) von Kapillarfasern thermoplastische Fasern mit einem Durchmesser von 10 µm bis 50 µm aufweisen, die Kapillare von 2 bis 6 µm enthalten.

2. Schwingungsdämpfer nach Anspruch 1, aufweisend eine reibschlüssige Verbindung der Bündel (4) von Kapillarfasern mit den Wänden des Hohlkörpers oder Profils.

3. Schwingungsdämpfer nach Anspruch 1 und 2, aufweisend thermoplastische Fasern mit einer kapillaren Innenstruktur.

4. Schwingungsdämpfer nach Anspruch 1 bis 3, aufweisend Fasern, die warmgeklebt sind.

5. Schwingungsdämpfer nach Anspruch 1 und 2, wobei die rohrförmigen Hohlkörper (3) oder die ähnlichen Profile die die Schwingung übertragenden Elemente sind, oder Elemente sind, in denen Schwingungen erzeugt werden.

6. Schwingungsdämpfer nach Anspruch 1 und 2, wobei die rohrförmigen Hohlkörper (3) oder die ähnlichen Profile zur Dämpfung an Schwingungselemente anzulegen sind.

7. Schwingungsdämpfer nach Anspruch 6, aufweisend Konstruktionen von Rahmen und Längsträgern aus den rohrförmigen Hohlkörpern (3) oder ähnlichen Profilen, die an Schichtstrukturen anzulegen sind.

8. Schwingungsdämpfer nach Anspruch 7, wobei diese Profile Längsschlitze aufweisen, in die Faserbündel unter leichtem Druck eingeführt werden.

9. Schwingungsdämpfer nach Anspruch 1, aufweisend plattenförmige Profile, die hohle Abschnitte mit paralleler Ausrichtung enthalten, die zur Oszillationsdämpfung an Schichtelemente anzulegen sind.

10. Schwingungsdämpfer nach Anspruch 9, wobei die hohlen Abschnitte der Dämpferplatten in Richtung der Ausbreitung von welligen Oszillationen auszurichten sind.

11. Schwingungsdämpfer nach Anspruch 9 und 10, aufweisend mehrere dieser Dämpferplatten, die drehend übereinander angeordnet sind, um die Schwingungsdämpfung durch differenzierte Ausrichtungen zu optimieren.

12. Schwingungsdämpfer nach einem der vorhergehenden Ansprüche, wobei die rohrförmigen Hohlkörper (3) oder die ähnlichen Profile mit Matrizen mit einer hohen Grenzflächenspannung, aber einer begrenzten Haftung an den Fasern, gesättigt sind.

## Revendications

1. Amortisseur de vibrations, comprenant des faisceaux (4) de fibres capillaires dans le sens longitudinal, modérément comprimés à l'intérieur de corps creux tubulaires (3) ou profilés similaires, **caractérisé en ce que** lesdits faisceaux (4) de fibres capillaires présentent des fibres thermoplastiques d'un diamètre de 10 µm à 50 µm contenant des capillaires de 2 à 6 µm.

2. Amortisseur de vibrations selon la revendication 1, comprenant un dispositif de raccordement par frottement desdits faisceaux (4) de fibres capillaires aux parois du corps creux ou profilé.

3. Amortisseur de vibrations selon les revendications 1 et 2, comprenant des fibres thermoplastiques de structure intérieure capillaire.

4. Amortisseur de vibrations selon les revendications 1 à 3, comprenant des fibres qui sont liées thermiquement.

5. Amortisseur de vibrations selon les revendications 1 et 2, dans lequel lesdits corps creux tubulaires (3) ou profilés similaires sont les éléments de transmission de vibrations ou des éléments dans lesquels des vibrations sont générées.

6. Amortisseur de vibrations selon les revendications 1 et 2, dans lequel lesdits corps creux tubulaires (3) ou profilés similaires doivent être appliqués pour une absorption sur des éléments vibrants.

7. Amortisseur de vibrations selon la revendication 6, comprenant des structures de cadres et de supports constituées de corps creux tubulaires (3) ou profilés similaires à appliquer sur des structures laminaires.

8. Amortisseurs de vibrations selon la revendication 7, dans lesquels ces profilés présentent des fentes longitudinales dans lesquelles des faisceaux de fibres sont insérés avec une légère compression.

9. Amortisseur de vibrations selon la revendication 1, comprenant des profilés en forme de plaque présentant des sections creuses à orientation parallèle, à appliquer pour l'amortissement d'oscillations sur des éléments laminaires.

10. Amortisseur de vibrations selon la revendication 9, dans lequel les sections creuses desdites plaques d'amortisseur doivent être alignées en direction de la propagation d'oscillations ondulées.

11. Amortisseur de vibrations selon les revendications 9 et 10, comprenant plusieurs de ces plaques d'amortisseur à disposer de façon rotative les unes sur les autres afin d'optimiser l'amortissement de vibrations par des alignements différenciés.

12. Amortisseur de vibrations selon l'unes des revendications précédentes, dans lequel lesdits corps creux tubulaires (3) ou profilés similaires sont saturés de matrice à tension de surface de séparation élevée, mais à adhésion limitée aux fibres.
